Europäisches Patentamt

European Patent Office

Office européen des brevets

(11) Publication number: **0 106 454**
**A1**

# EUROPEAN PATENT APPLICATION

(21) Application number: **83304775.6**

(22) Date of filing: **18.08.83**

(51) Int. Cl.³: **F 15 B 21/08**

(30) Priority: **22.09.82 US 421384**

(43) Date of publication of application:
**25.04.84 Bulletin 84/17**

(84) Designated Contracting States:
**DE FR GB**

(71) Applicant: GENERAL MOTORS CORPORATION
General Motors Building 3044 West Grand Boulevard
Detroit Michigan 48202(US)

(72) Inventor: Butler, Raymond Ora, Jnr.
1817 East 44th Street
Anderson Indiana 46013(US)

(72) Inventor: Dennis, David Stanley
834 Old Orchard Road
Anderson Indiana 46011(US)

(72) Inventor: Fattic, Gerald Thomas
3711 Fairfield
Anderson Indiana 46011(US)

(74) Representative: Breakwell, John Neil Bower et al,
GM Patent Section Luton Office (F6) P.O. Box No. 3
Kimpton Road
Luton Beds. LU2 0SY(GB)

(54) Hydraulic actuator.

(57) A hydraulic actuator (48) is used in a hydraulic servo system to control the positioning of a hydraulically operated adjustable pulley (116,118). The hydraulic actuator (48) has a double-ended piston (66) both sides of which are subject to fluid pressure. A pair of solenoid valves (36, 54) control the selective exhausting of fluid from the side of the piston (66) towards which movement is desired. The movement of the piston (66) operates a spool valve (96) through a linkage (86), and the spool valve in turn (96) controls fluid pressure within the hydraulically-operated pulley (112, 114).

./...

Croydon Printing Company Ltd.

HYDRAULIC ACTUATOR

This invention relates to a hydraulic actuator in which a double-ended piston member having an output member connected thereto is slidably disposed in a cylinder, a pair of fluid passage means are connected to the cylinder for directing supply and discharge of fluid to and from respective sides of the piston, and a pair of control solenoids are selectively energizable to place a fluid pressure supply in communication with one or other of the fluid passage means, for example as disclosed in US-A-3,818, 800.

The invention is concerned with the positioning of an actuator by maintaining a pressure source continually connected thereto while controlling the pressure from the source with normally open solenoids which are closed to exhaust one side of the actuator for movement thereof.

To this end a hydraulic actuator in accordance with the present invention is characterised in that a pair of pressure passages are provided with respective check valve means for controlling the fluid flow direction therein, a supply passage is connected between the fluid pressure supply and the check valve means, a pair of solenoid valve means including respective control solenoids as aforesaid are disposed downstream of the check valve means between the respective pressure passages and the fluid passage means, for selectively connecting the respective fluid passage means for a supply or discharge function, each solenoid valve means is conditioned to normally connect the respective pressure passage to the corresponding fluid passage means so that fluid pressure from the fluid pressure supply is normally available at both sides of the double-ended piston member, and the solenoid valve means are controllable to selectively connect one or other side of the double-ended piston member to reduced pressure to permit discharge of fluid when movement of the output member is desired.

In a preferred arrangement of a hydraulic actuator in accordance with the present invention, a hydraulically-operated actuator system has a double-ended piston with an output member operating a valve, and the pressure input to the respective piston ends is controlled by a pair of normally open solenoid valves disposed between the pressure source and the piston with each solenoid having an input check valve to prevent back-flow to the source and each solenoid valve being operable to control the pressure level to be equal to or below the pressure level of the source to effect movement of the piston, which movement is directed to the valve to provide a mechanical feedback.

In a hydraulic actuator in accordance with the present invention, the check valves prevent movement of the actuator if the electric source malfunctions.

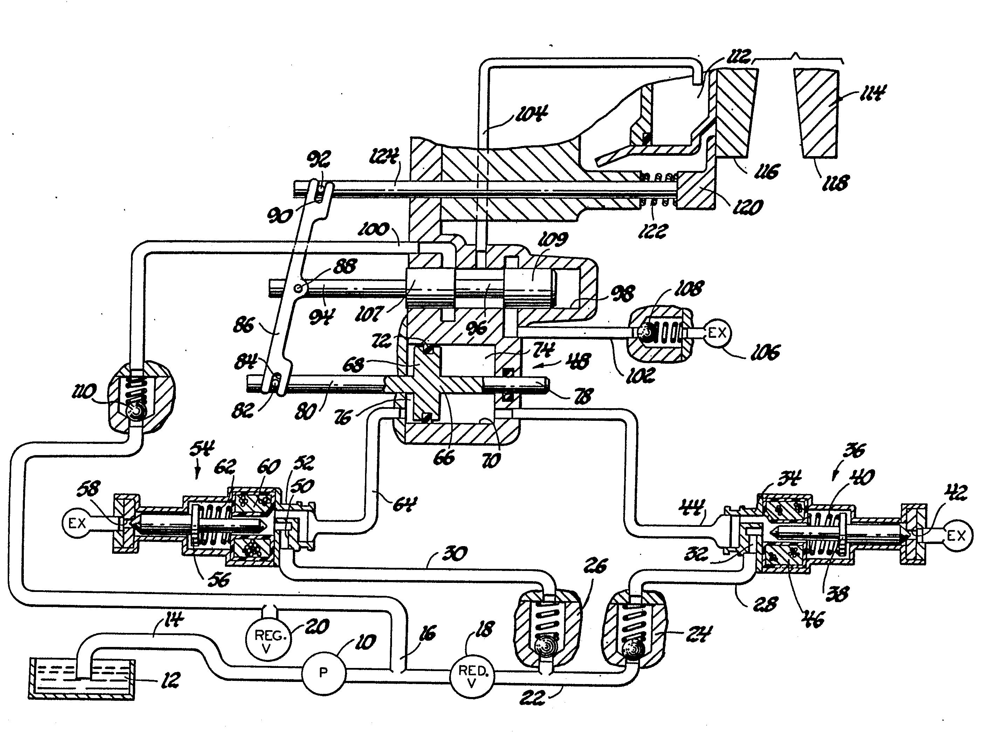

The single Figure of the drawing is a diagrammatic representation of a hydraulic system incorporating a preferred embodiment of a hydraulic actuator in accordance with the present invention.

In the drawing, there is shown a conventional hydraulic pump 10 which draws fluid from a reservoir 12 through an inlet passage 14. The pump 10 delivers fluid to a high pressure passage 16 which is connected to a reducing valve 18 and a regulator valve 20. The reducing valve 18 supplies a constant pressure level to a feed passage 22. The regulator valve 20 establishes the maximum system pressure to be found in the passage 16.

The feed passage 22 has connected thereto a pair

of conventional ball check valves 24 and 26 which have the outlets thereof connected to pressure passages 28 and 30 respectively. The passage 28 is connected to an inlet port 32 which is formed in a body 34 housing a solenoid valve generally designated 36. The solenoid valve 36 includes a movable valve member 38 which is positioned by a spring 40 to close an exhaust passage 42 while opening the inlet port 32 to a fluid passage 44. The solenoid valve 36 also includes a selectively energizable coil 46 which, when energized will cause leftward movement of the valve member 38, thereby opening the exhaust port 42 and closing the inlet port 32. This effectively connects the fluid passage 44 to exhaust 42. The fluid passage 44 is connected to a hydraulic piston assembly, generally designated 48.

The pressure passage 30 is connected to an inlet port 50 disposed in a housing 52, which is a component in a solenoid valve generally designated 54. The solenoid valve 54 is identical in construction to the solenoid valve 36, and includes a valve member 56, an exhaust port 58, a solenoid coil 60 and a spring 62. The solenoid valve 54 controls the fluid flow to and from the fluid passage 64, which is also connected to the hydraulic piston assembly 48.

The hydraulic piston assembly 48 includes a double-ended piston member 66 which has a central cylindrical body 68 slidably disposed in a cylinder 70. An annular seal 72 disposed on the body 68 effectively divides the cylinder 70 into two fluid chambers 74 and 76. The chamber 74 is connected to the fluid passage 44, and the chamber 76 is connected to the fluid passage 64. The double-ended piston member 66 includes a pair of rod members 78 and 80 which extend through the ends of the chambers 74 and 76 respectively. The rod members 78 and 80 are identical in diameter, such that the effective cross-sectional areas of the chambers 74 and 76 are identical. The rod member 80 provides an output member for the double-ended piston member 66, and has disposed thereon a pin 82 slidably disposed in a slot 84 formed on a link member 86. The link member 86 is pivoted on a pin 88, and also includes a slot 90 in which is disposed a pin member 92.

The pin 88 is secured to an extension 94 formed on a valve spool 96 which is slidably disposed in a valve bore 98. The valve bore 98 has connected thereto an inlet passage 100, an outlet passage 102 and a controlled passage 104. A pair of spaced valve lands 107 and 109 disposed on the valve spool 96 provide selective fluid connection between the passages 100 and 104 when it is desired to pressurize the passage 104, and between the passages 102 and 104 when it is desired to reduce the pressure in the passage 104.

The passage 102 is connected to an exhaust port 106 by way of a conventional ball check valve 108 which is effective to maintain a minimum pressure value in the passage 102. The passage 100 is supplied by way of a ball check valve 110 from the passage 16, and is therefore subject to the system pressure developed by the pump 10. Should the system pressure be reduced below the pressure in the passage 100, the ball check valve 110 will prevent reduction of pressure in the passage 100. The passage 104 is connected to a hydraulic chamber 112 which is a component of a variable pulley member 114. The pulley member 114 is a conventional adjustable pulley wherein fluid pressure in the chamber 112 causes the pulley halves 116 and 118 to move closer together.

If the pressure in the chamber 112 is reduced, a spring member, not shown, is operable to widen the distance (separation) between the pulley halves 116 and 118. The pulley half 116 is denoted as a movable sheave, and the pulley half 118 is denoted as a fixed sheave. The pulley half 116 is maintained in abutment with a shoe member 120 by the action of a spring 122. The shoe member 120 has secured thereto a rod 124 in which is disposed the pin 92. Thereby, movement of the pulley half 116 is sensed by the link member 86 through the intermediary of the pin and slot connection formed by the pin 92 and slot 90.

The double-ended piston 66 is shown in its maximum leftward position, and the pulley 114 is shown in its minimum-width position. There can be no further leftward adjustment of the double-ended piston member 66. Generally, if the actuator is used in a belt-type variable transmission and the pulley 114 is the input pulley, this would be denoted as the maximum overdrive ratio position. Should it be desired to reduce the overdrive ratio, the solenoid valve 36 is operated to provide a controlled reduction of the pressure in the chamber 74. The pressure in the chamber 76 will meanwhile remain fixed at the value established by the reducing valve 18, such that rightward movement of the double-ended piston member 66 will occur.

On first movement of the double-ended piston member 66, the rod 124 is stationary, and therefore the valve spool 96 will be moved rightwardly by the link 86. This movement results in opening of the passage 102 to the passage 104, such that there will be a reduction in the pressure in the chamber 112, and the pulley 114 will assume a wider opening.

As the pulley half 116 moves leftwardly, the rod 124 will likewise move leftwardly, resulting in pivoting of the link member 86 about the pin 82 such that the valve spool 96 will be returned to the neutral position shown. The amount of movement of the piston member 66 is determined by the amount of time that the solenoid 36 or solenoid 54 is maintained actuated. The system is a substantially constant flow-rate system in that all the passage sizes are fixed and inlet pressure is fixed. Thus the system can be designed such that, for example, if one millimetre of rightward movement is desired at the piston member 66, the solenoid valve 36 is maintained open for a period of 100 milliseconds. Conversely, if one millimetre of leftward movement of the piston 66 is desired, the solenoid valve 54 is maintained actuated for a period of 100 milliseconds.

When either solenoid valve 36 or 54 is returned from the actuated position to the normally open position by the spring 40, fluid pressure will pass from the passage 28 to the passage 44. Additionally, any inertia in the piston member 66 will itself create some pressure increase upon the closing of the exhaust passage 42. There can in fact be an instantaneous pressure spike greater than the pressure in the passage 22; however, this pressure spike cannot be transmitted back to the reducing valve 18 since the check valve 24 will not permit back-flow.

If for some reason external forces on the piston member 66 should be sufficient to cause movement of the piston member, the pressure generated by such movement (compression of the fluid) cannot be transmitted to the pressure source because the check valves 24 and 26 will not permit back-flow. Also,

the increased pressure for small movements will resist the external forces.  Thus the piston member 66 is very stable in the position  selected by the operator and/or electrical control system through the operation of the solenoid valves 36 and 54.  These solenoid valves 36 and 54 can be controlled by any of the well-known electrical control systems, or alternatively, if desired, could be controlled manually.

With a manual control system, however, the response time to the piston member 66 would be greatly reduced so as to lessen the likelihood of control overshoot due to the slowness of response accompanying manual operation.

8

0106454

Claims:

1. A hydraulic actuator in which a double-ended piston member (66) having an output member (80) connected thereto is slidably disposed in a cylinder (70), a pair of fluid passage means (44,64) are connected to the cylinder for directing supply and discharge of fluid to and from respective sides of the piston, and a pair of control solenoids (46, 60) are selectively energizable to place a fluid pressure supply (10) in communication with one or other of the fluid passage means, characterised in that a pair of pressure passages (28, 30) are provided with respective check valve means (24, 26) for controlling the fluid flow direction therein, a supply passage (22) is connected between the fluid pressure supply (10) and the check valve means, a pair of solenoid valve means (36, 54) including respective control solenoids (46, 60) as aforesaid are disposed downstream of the check valve means between the respective pressure passages (28, 30) and the fluid passage means (44, 64) for selectively connecting the respective passage means for a supply or discharge function, each solenoid valve means is conditioned to normally connect the respective pressure passage to the corresponding fluid passage means so that fluid pressure from the fluid pressure supply is normally available at both sides of the double-ended piston member (66), and the solenoid valve means (36, 54) are controllable to selectively connect one or other side of the double-ended piston member (66) to reduced pressure to permit discharge of fluid when movement of the output member is desired.

2. A hydraulic actuator according to claim 1, characterised in that the check valve means (24, 26) are operable to limit the influence of external forces on the double-ended piston member (66) by preventing flow from the double-ended piston member to the fluid pressure supply (10).

3. A hydraulic actuator according to claim 1 or 2, characterised in that valve means (18) for maintaining a constant pressure in the fluid supplied is connected between the fluid pressure supply (10) and the supply passage (22), and that the solenoid valve means (36, 54) normally connect the said constant pressure to the fluid passage means (44, 64) so that the constant pressure from the pressure-maintaining valve means (18) is normally available at both sides of the double-ended piston member (66), with the solenoid valve means being individually controllable to selectively connect one or other side of the double-ended piston member to the said reduced pressure to permit discharge of fluid when movement of the output member (80) is desired.

0106454

## European Patent Office

**EUROPEAN SEARCH REPORT**

Application number

EP 83 30 4775

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | GB-A-2 075 220 (DEUTSCHE FORSCHUNGS- UND VERSUCHSANSTALT FÜR LUFT- UND RAUMFAHRT) * Claims 1, 3-5; page 3, lines 52-103; figure 4 * | 1,2 | F 15 B 21/08 |
| X | DE-A-3 104 704 (P.H.G. NYSTRÖM) * Claims 1, 2, 4; figure 4 * | 1,2 | |
| X | GB-A- 865 418 (A. ROBINSON & CO.) * Claims 1, 5-8, 13; page 3, line 95 - page 4, line 46; figure 1 * | 1-3 | |
| A | FR-A-2 141 576 (SERAM) | | |
| | ----- | | TECHNICAL FIELDS SEARCHED (Int. Cl. ³) |
| | | | F 15 B 21/00 |

The present search report has been drawn up for all claims

| Place of search BERLIN | Date of completion of the search 23-11-1983 | Examiner LEMBLE Y.A.F.M. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03 82